# FASCICULE DE BREVET EUROPEEN

(11) **EP 2 089 302 B1**
(45) Date de publication et mention de la délivrance du brevet: **20.11.2013**
(21) Numéro de dépôt: 07870337.8
(22) Date de dépôt: 27.11.2007
(51) Int. Cl.: B65G 69/00, B60T 3/00

(54) **SABOT DE CALAGE D'UNE ROUE ET INSTALLATION DE CALAGE MOTORISEE**
SCHUH ZUM STILLSTAND EINES RADES UND MOTORISIERTE STILLSTANDANORDNUNG
SHOE FOR HALTING A WHEEL AND POWERED HALTING ASSEMBLY

(30) Priorité: 01.12.2006 FR 0610561
(43) Date de publication de la demande: 19.08.2009
(73) Titulaire: Schardes Eurl, 73110 Villard Sallet (FR)
(72) Inventeur: GOYET, Laurent, 73110 Villard Sallet (FR)
(74) Mandataire: Croonenbroek, Thomas Jakob
(86) Numéro de dépôt international: PCT/FR2007/001939
(87) Numéro de publication internationale: WO 2008/071876

(56) Documents cités:
- DE-C1- 4 427 406
- FR-A1- 2 750 123
- US-A- 2 240 512
- US-A- 2 903 094
- US-A- 3 387 686
- US-B1- 6 238 163

## Description

L'invention concerne un sabot de calage de la roue d'un engin roulant pour immobiliser l'engin en question relativement au sol.

Elle concerne également une installation de calage motorisée comprenant un tel sabot.

Un dispositif de calage est utilisé de façon courante pour immobiliser la remorque d'un camion ou le camion lui-même contre un quai de chargement, le but étant de charger ou décharger la marchandise sans risque que le camion ou la remorque s'éloigne accidentellement du quai. Ceci pourrait se produire par exemple si le frein de parking est mal serré ou bien si le chauffeur pense prématurément que les opérations de chargement ou déchargement sont terminées. En règle générale un dispositif de calage est formé par une butée ou une cale en coin qui entrave la rotation d'une roue arrière de l'engin proche du quai par rapport au sol.

Les engins roulants ont des constructions très diverses, et l'essieu arrière peut se trouver plus ou moins loin de l'arrière de l'engin en fonction du porte-à-faux. Ainsi on ne peut pas prévoir à priori la position des roues arrière lorsque l'arrière du camion ou de la remorque sera contre un quai. Dans ces conditions il est nécessaire que la butée ou la cale soit mobile selon la direction longitudinale définie par l'engin.

Une deuxième contrainte à prendre en compte est que les engins n'ont pas tous la même configuration d'essieux arrière. Des engins sont équipés à l'arrière d'un essieu simple, alors que d'autres engins ont à l'arrière des essieux jumelés, c'est-à-dire deux voire trois essieux espacés longitudinalement.

Certains engins peuvent aussi être équipés d'un essieu escamotable qui est relevé lorsque l'engin est à vide. Il faut que la cale ou la butée de calage puisse être mise en place contre une des roues de l'engin dans toutes ces configurations d'essieu arrière. Dans les dispositifs de calage à butée, la butée entrave le déplacement longitudinal de la roue par un appui simple, et son support est ancré dans le sol. En règle générale la butée peut être déplacée le long d'un rail ou d'un chemin longitudinal. Le dispositif d'ancrage doit être capable de supporter dans ce cas toutes les contraintes longitudinales que la roue exerce à rencontre de la butée.

Les demandes de brevet EP609049, WO02/16238, WO95/24353, US2002141852 décrivent de tels dispositifs.

Ils demandent un ouvrage important de génie civil pour assurer l'ancrage dans le sol. En général l'ouvrage en question est une tranchée dans laquelle est logé un rail de guidage et un système à chariot mobile qui porte la butée de calage. L'équipement d'un ensemble de quais est coûteux et demande un temps de réalisation relativement long.

Il existe aussi des installations à butées multiples. Les butées sont espacées longitudinalement, elles sont escamotées dans une tranchée et en fonction de la position de la roue à caler, telle ou telle butée est relevée. Ces dispositifs sont complexes et demandent également un ouvrage important de génie civil pour le logement des butées dans le sol. La demande de brevet FR2841546 décrit un tel mode de construction. Dans les dispositifs de calage à cale en coin, la cale s'engage entre la base du pneu et le sol. Une rotation éventuelle de la roue en direction de la cale augmente la pression que la cale exerce sur le sol et donc son adhérence par un phénomène de coincement. Un dispositif à cale en coin peut être construit comme une cale individuelle qu'on déplace à la main, ou alors la cale peut être montée mobile à l'extrémité d'un bras. Dans ce dernier cas l'installation au sol est simplifiée car son ancrage dans le sol n'est pas sollicité lors de la retenue de la roue, elle a uniquement pour fonction d'assurer le déplacement au sol de la cale.

Les demandes de brevet FR2481663, FR2689845, FR2750123 décrivent de tels modes de construction.

Les dispositifs à cale en coin donnent de bons résultats, leur installation est plus facile à mettre en oeuvre que les dispositifs à butée. Cependant si pour un motif ou un autre la pression du pneu sur la cale vient à augmenter, l'adhérence au sol de la cale augmente aussi, si bien que la cale est difficile voire impossible à enlever sans déplacer l'engin. Ceci se produit notamment lorsqu'on procède à un chargement de l'engin. Sous la charge les pneus et en particulier le pneu retenu par la cale s'affaissent.

Le document US 6238163 décrit un dispositif de retenue d'un véhicule, comportant une embase pouvant rouler sur le sol, et dont l'extrémité en forme de coin peut s'insérer sous le pneu. A l'embase est articulé un bras de verrouillage pivotant dont l'extrémité vient en butée contre la partie médiane du pneu. L'actionnement du bras s'effectue au moyen d'une genouillère pouvant occuper une position active d'extension, ou une position inactive rétractée. La retenue du pneu s'opère en deux points distincts séparés l'un de l'autre.

Les documents US 2240512, 3387686 et 2903094 se rapportent à des sabots de calage prévu pour caler une roue d'un engin roulant sur le sol et comprenant une embase prévue pour reposer contre la surface du sol, une rampe d'appui oblique prévue pour être engagée sous la bande de roulement de la roue, la rampe d'appui étant la face externe d'un panneau ayant deux bords transversaux, le panneau étant mobile relativement à l'embase entre une position de calage où la rampe d'appui est inclinée relativement à l'embase selon un angle donné de calage et une position de dégagement où un bord transversal au moins du panneau est rapproché de l'embase. La structure des sabots est conformée selon des triangles déformables entre une position active de calage et une position inactive de rangement.

Le but de l'invention est de proposer un sabot de calage d'un pneu qui peut être dégagé facilement de la roue en toutes circonstances.

Le sabot de calage selon l'invention est caractérisé en ce que :
- le panneau est relié à l'embase par un mécanisme à genouillère mobile entre une position ouverte et une position cassée, ladite genouillère étant formée par deux biellettes articulées à l'embase et au panneau, et reliées entre elles par une articulation commune,
- un loquet est solidaire en rotation avec l'une des biellettes, et peut être manoeuvré pour briser la genouillère,
- un dispositif de rappel élastique s'oppose élastiquement à la brisure de la genouillère et rappelle la genouillère en position ouverte.

Le loquet peut être manoeuvré à l'aide d'une pédale, ou à l'aide d'un levier de guidage du sabot.

Selon une caractéristique secondaire, la position de calage est une position stable, la position de dégagement est une position instable, et le dispositif de rappel élastique rappelle le panneau dans la position stable de calage.

Selon une caractéristique secondaire, l'installation est manoeuvrée au sol par un bras d'entraînement qui pilote la position du panneau lors du dégagement du sabot.

L'invention sera mieux comprise en se référant à la description ci-dessous et aux dessins en annexe qui en font partie intégrante.
La figure 1 est une vue générale du sabot de calage selon un premier mode de mise en oeuvre de l'invention.
La figure 2 montre le mécanisme à l'intérieur du sabot dans la position de calage.
La figure 3 est une vue semblable et montre le sabot en position de dégagement.
Les figures 4 et 5 sont relatives à une variante de construction du sabot.
Les figures 6 et 7 montrent une autre variante de construction.
La figure 8 représente une installation motorisée.
La figure 9 montre le sabot de la figure précédente en position de calage.
La figure 10 est une vue partielle du sabot et du chariot de l'installation.
La figure 11 montre le mécanisme à l'intérieur du sabot.
Les figures 12 et 13 sont relatives à une variante de construction d'une installation motorisée.

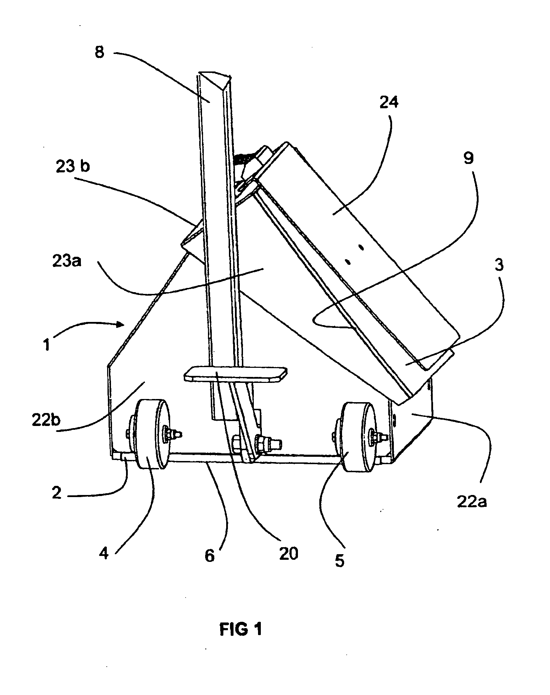

La figure 1 représente un sabot de calage 1. Il s'agit d'un sabot qui est prévu pour être déplacé manuellement par un opérateur. De façon classique, le sabot présente une embase 2 qui repose contre le sol, et une rampe d'appui 3 inclinée qui est prévue pour être mise au contact de la bande de roulement de la roue ou du pneu à immobiliser.

A titre indicatif les dimensions du sabot sont les suivantes, la longueur est de 30 centimètres, la largeur 24 centimètres, et la hauteur maximale en position de calage 30 centimètres. Ces valeurs ne sont pas limitatives.

L'angle d'inclinaison de la rampe d'appui est déterminé pour que le sabot soit apte à entraver la rotation de la roue par coincement entre la bande de roulement de la roue et le sol, sans glissement sur le sol. Par exemple l'angle d'inclinaison est compris entre 30 et 55 degrés, et de préférence voisin de 45 degrés. Ces valeurs sont seulement indicatives. En fait l'angle est déterminé en fonction de la zone de la bande de roulement avec laquelle le sabot vient en contact. Pour un sabot donné, la position de cette zone est cependant fonction du diamètre de la roue. A titre indicatif, une roue de camion présente un diamètre qui est compris entre 0,80 et 1,10 mètre. L'angle d'inclinaison de la rampe d'appui est donc déterminé d'après un diamètre de roue moyen.

Selon le mode de réalisation illustré, la rampe d'appui 3 est plane. La rampe peut également être incurvée pour épouser la courbure de la bande de roulement au moins sur une partie de sa surface. Selon un autre mode de construction, la rampe d'appui a une courbure variable qui s'adapte à la courbure de la bande de roulement. Par exemple la rampe d'appui est la surface externe d'un patin de matière élastiquement déformable, notamment un patin en élastomère.

Egalement on peut équiper la rampe d'appui d'un dispositif pour détecter le contact du sabot avec la roue. Des dispositifs de ce genre sont connus. Un exemple de réalisation sera décrit dans la suite.

L'embase 1 représentée en figure 1 est équipée de roulettes 4 et 5 situées le long de son bord extérieur 6, c'est à dire le bord latéral du sabot qui se trouve le plus proche de l'opérateur qui manipule le sabot et qui est parallèle à la direction longitudinale. Les roulettes sont orientées avec un axe de rotation horizontal et transversal à la direction de calage du sabot.

Lorsque l'embase du sabot est au contact du sol, les roulettes sont décollées. Par contre les roulettes sont aptes à porter le sabot dès que celui-ci est basculé relativement à son bord extérieur 6. Ces roulettes facilitent la manutention du sabot au sol. En variante, les roulettes peuvent être montées à l'extrémité de bras de suspension rappelés par un ressort. La raideur du ressort est suffisante pour que les roulettes décollent l'embase du sol lorsque le sabot est dégagé de la roue. Les roulettes sont cependant facultatives.

Le sabot comprend de préférence un levier 8 de guidage situé du côté de son bord extérieur 6. L'extrémité du levier est prévue pour être saisie par un opérateur. Elle peut présenter à cet effet une tête ou tout autre dispositif approprié. Le levier se dresse vers le haut verticalement ou en oblique en direction de l'opérateur. Il peut être fixé solidairement au sabot, ou il peut être articulé par exemple autour d'un axe parallèle à l'axe des roulettes.

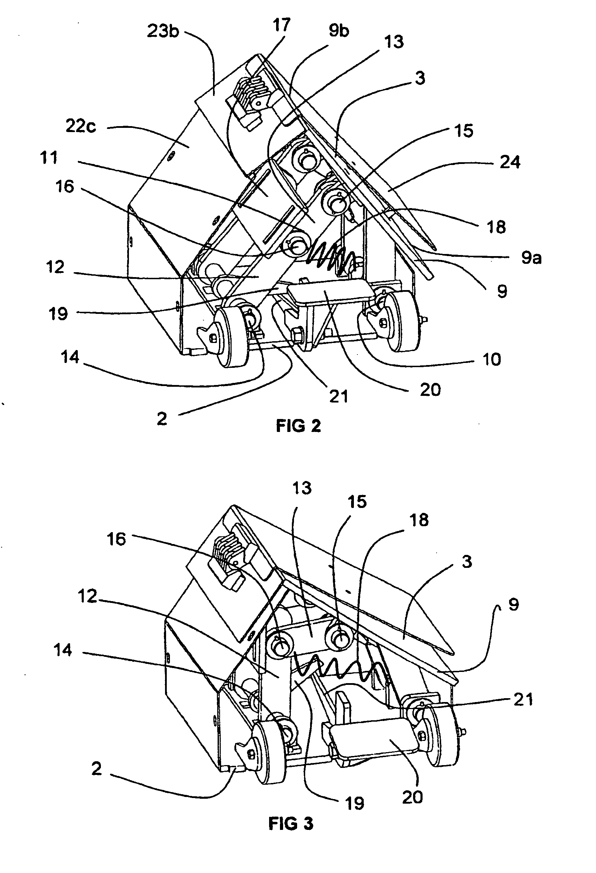

Selon une caractéristique de l'invention, la rampe d'appui 3 est la surface externe d'un panneau d'appui 9 qui est monté mobile relativement à l'embase. Le panneau 9 peut se déplacer relativement à l'embase entre une position de calage, celle représentée dans les figures 1 et 2, et une position de dégagement où la rampe d'appui s'abaisse en direction de l'embase et forme avec elle un angle inférieur à l'angle qu'elle présente dans la position de calage. La figure 3 montre le sabot dans cette position.

Si pour une raison ou une autre le sabot se trouve coincé sous un pneu dans sa position de calage, par exemple à la suite d'un chargement de l'engin, le simple fait de faire passer le panneau en position de dégagement permet d'extraire le sabot moyennant un effort réduit de la part de l'opérateur.

En outre, de préférence, la position de calage du panneau est une position stable, la position de dégagement est une position instable, et un dispositif de rappel élastique rappelle le panneau vers sa position stable de calage.

Selon le mode de réalisation illustré, le mécanisme d'articulation et de rappel qui relie le panneau 9 et l'embase 2 est logé dans le volume compris entre l'embase et le panneau.

En se référant aux figures 2 et 3, ce mécanisme comprend une articulation à pivot et un mécanisme à genouillère. Le pivot 10 est orienté parallèlement aux plans formés par l'embase et le panneau respectivement. Il est monté entre le bord transversal 9a du panneau la plus proche de l'embase et le bord en regard de l'embase. Par exemple il traverse des oreilles issues de ces différents éléments. En vue de dessus, le pivot 10 se trouve entre la zone théorique d'appui d'un pneu sur la rampe et le centre de la roue pour qu'un basculement du panneau autour du pivot 10 dégage la rampe 3 de sa liaison de contact avec la bande de roulement. Tout autre moyen de liaison opérant de cette façon convient également.

L'autre bord transversal 9b du panneau, celui le plus éloigné en altitude de l'embase est relié à l'embase par un mécanisme à genouillère 11. Ce mécanisme comprend deux biellettes 12 et 13 respectivement articulées au panneau et à l'embase autour d'axes 14, 15, et reliées l'une à l'autre par axe médian 16. Les axes 14, 15, 16 sont parallèles au pivot 10.

En position de calage, la genouillère 11 est ouverte, les axes 14, 15 et l'axe médian 16 sont alignés. Eventuellement l'axe 16 peut dépasser l'alignement des axes 14 et 15. La genouillère est maintenue de façon stable dans cette position ouverte par l'appui d'une extension 17 solidaire de la biellette 12 contre la biellette 13. Egalement, un dispositif de rappel élastique exerce un effort de rappel sur la genouillère pour la maintenir dans cette position ouverte. Ce dispositif est représenté dans les figures sous la forme d'un ressort de traction 18 qui relie l'axe médian 16 et le pivot 10 et qui rappelle l'axe médian 16 dans le sens où l'extension 17 est en appui contre la biellette 13. En variante le dispositif de rappel pourrait être un ressort de torsion qui agit sur l'une ou l'autre des biellettes. Tout autre dispositif de rappel convient aussi.

D'autres moyens que l'extension 17 pourraient aussi convenir pour stabiliser la genouillère dans sa position ouverte.

Ainsi, la position ouverte de la genouillère est une position stable. Dans ces conditions la position de calage du panneau est également une position stable.

Un système est prévu pour casser la genouillère. Selon le mode de réalisation illustré, le système comprend un loquet 19 qui est solidaire en rotation avec la biellette 12 par l'intermédiaire de l'axe 14 et qui s'étend du côté opposé à l'extension 17.

Le loquet 19 est manoeuvré à l'aide d'une pédale 20. La pédale 20 est articulée autour d'un axe orienté parallèlement au plan de l'embase 2 et au bord externe 6 de l'embase. Autour de cet axe, la pédale est solidaire en rotation avec un taquet 21. L'extrémité du taquet 21 est engagée sous l'extrémité du loquet 19. Ainsi, lors d'un basculement de la pédale, le taquet 21 force le loquet 19 à basculer, ce qui provoque la cassure de la genouillère 11, le panneau 9 pivote alors vers sa position de dégagement.

Dès que l'effort sur la pédale est relâché, le ressort 18 rappelle la genouillère 11 dans sa position ouverte stable, ce qui renvoie la pédale dans sa position d'origine, le panneau 9 également. Eventuellement on peut prévoir un ressort de rappel propre pour la pédale.

Cette manoeuvre de casser la genouillère est nécessaire seulement si le sabot se trouve coincé sous la roue de l'engin, afin de dégager le panneau de son adhérence avec la bande de roulement de la roue. S'il n'y a pas de coincement, l'opérateur peut faire glisser le sabot sur le sol et le sortir de sa position de calage sous la roue par un simple effort exercé sur le levier 8.

Le levier 8 précédemment décrit est solidaire de l'embase 2 ou du carter d'habillage du sabot. En variante, le levier peut être articulé au sabot autour d'un axe parallèle à l'axe de la pédale 20, ce qui fait qu'au-delà d'un certain angle de basculement en direction du sol le levier entraîne avec lui la pédale en rotation.

En variante le taquet 21 et le levier 8 peuvent être solidaires l'un de l'autre, la pédale étant absente. Le basculement du levier fait pivoter le taquet. On peut aussi prévoir un dispositif de verrouillage pour que le basculement du levier dans le but de casser la genouillère soit possible après avoir réalisé une manoeuvre de déverrouillage, par exemple un dégagement du levier dans une direction perpendiculaire à la direction de basculement. Selon une autre variante, on peut prévoir aussi dans la tête du levier une poignée que l'opérateur peut actionner à la main. L'actionnement de la poignée place le taquet sur la trajectoire du loquet. Ainsi selon que la poignée est actionnée ou non, le mouvement de basculement du levier que l'opérateur effectue pour dégager le sabot s'accompagne ou non d'une action sur la cassure de la genouillère. Ce genre de mécanisme est connu avec les dispositifs manuels de manutention de palette.

Le loquet peut également être une partie d'une des biellettes de la genouillère.

Au lieu d'un système à loquet on peut prévoir un système à câble, avec une commande de manoeuvre au niveau du levier.

De préférence, comme cela est représenté dans les figures, le sabot présente des parois d'habillage dont seules les parois 22a, 22b, 22c et 23a, 23b, sont visibles dans les figures. Ces parois forment respectivement avec l'embase 2 et le panneau 9 deux boîtiers ouverts qui s'emboîtent l'un dans l'autre, formant ainsi globalement un carter de protection pour le mécanisme à genouillère. On peut prévoir aussi que le sommet des parois liées à l'embase 2 ou une partie d'entre elles forme une butée de retenue pour le panneau 9 lorsque la genouillère est cassée. Tout autre moyen approprié peut aussi former une telle butée.

Le sabot 1 peut être équipé de dispositifs auxiliaires. Par exemple il peut être équipé d'un détecteur de contact avec une roue. Dans la figure 1, on peut voir un volet 24 qui recouvre le panneau 9. Le volet est libre de pivoter autour d'une articulation qui le relie au panneau 9, et en l'absence de contrainte il est légèrement décollé du panneau 9. Lorsque le sabot est amené contre une roue, le volet 24 est appliqué contre le panneau 9. Un contacteur électrique ou tout autre actionneur approprié électrique, pneumatique ou hydraulique est alors actionné par le volet et cet actionneur pilote un circuit de traitement pour signifier la mise en place correcte du sabot contre la roue.

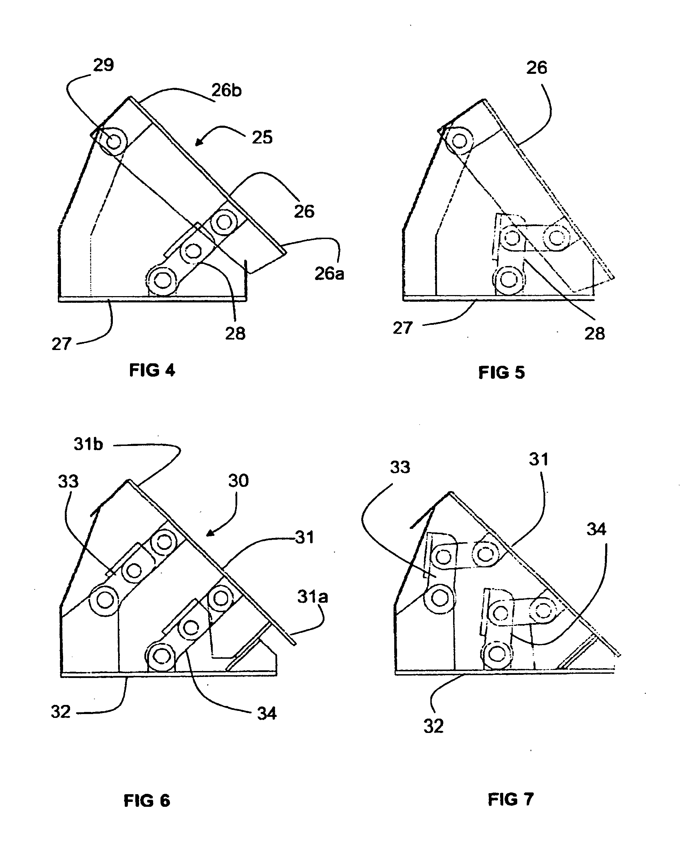

Les figures 4 et 5 sont relatives à une variante de construction du sabot. Ces figures représentent un sabot 25 avec un panneau d'appui 26 et une embase 27. Le panneau d'appui fournit la rampe d'appui pour caler la roue. Il est mobile relativement à l'embase entre deux positions qui sont représentées respectivement dans les figures 4 et 5, la figure 4 représentant la position de calage, et la figure 5 la position de dégagement. Le changement de position est piloté par une genouillère 28 qui est située vers le bord transversal 26a du panneau 26 le plus proche de l'embase 27. Du côté de l'autre bord transversal 26b, le panneau peut pivoter autour d'un pivot 29. Comme cela a été décrit précédemment, de préférence la position ouverture de la genouillère qui est représentée en figure 4 est une position stable, et la genouillère est rappelée dans cette position par tout moyen approprié, et par exemple par une ressort qui peut être ici un ressort de compression. Ce ressort n'est pas représenté dans les figures 4 et 5. Il rappelle élastiquement le panneau 26 et sa rampe d'appui dans la position de calage. Les mêmes moyens que ceux qui ont été décrits précédemment peuvent être utilisés ici pour casser la genouillère. La genouillère peut être cassée vers l'intérieur de la cale, comme cela est représenté, ou vers l'extérieur. Lorsque la genouillère 28 est cassée, c'est le bord 26a le moins éloigné en altitude de l'embase 27 qui est rapproché de l'embase, ce qui permet de dégager plus facilement le sabot.

Les figures 6 et 7 montrent une autre variante de construction. Le panneau d'appui 31 du sabot 30 est ici relié à l'embase 32 par deux genouillères 33, 34 qui sont situées chacune vers un bord transversal 31a, 31b du panneau. Chacune des genouillères agit sur un bord transversal 31a, 31b du panneau d'appui. De préférence les deux genouillères sont rappelées en position d'ouverture par un dispositif de rappel élastique, par exemple un ou plusieurs ressorts. La cassure des genouillères peut être coordonnée, c'est à dire commandée depuis le même organe de manoeuvre, ou bien la cassure de chacune des genouillères peut être commandée par un organe de manoeuvre différent. Lorsque les deux genouillères sont actionnées simultanément, c'est l'ensemble du panneau d'appui qui se rapproche ou s'éloigne en altitude de l'embase.

D'autres modes de construction conviennent également. Par exemple au lieu d'un dispositif mécanique à genouillère on peut mettre un vérin hydraulique.

Le système à genouillère présente cependant l'avantage d'une grande simplicité et d'une grande fiabilité. En outre le sabot ainsi construit est léger et peut être facilement déplacé sur le sol.

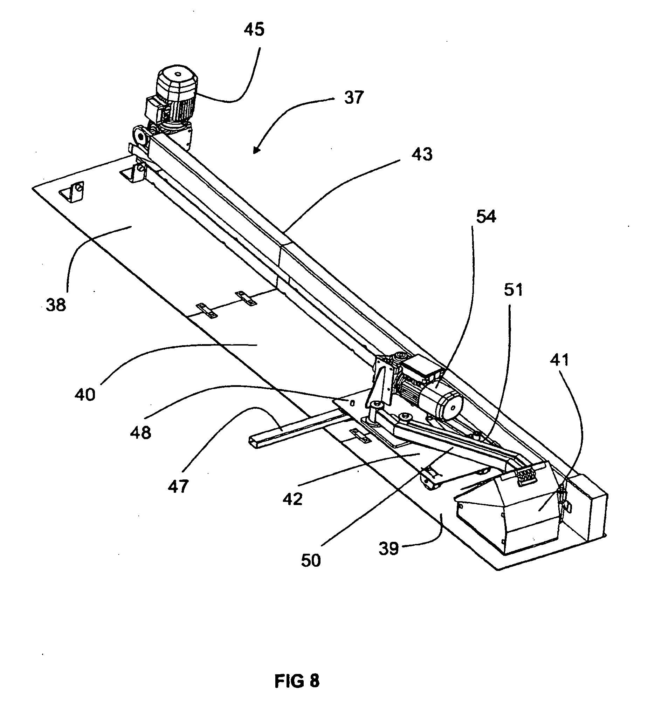

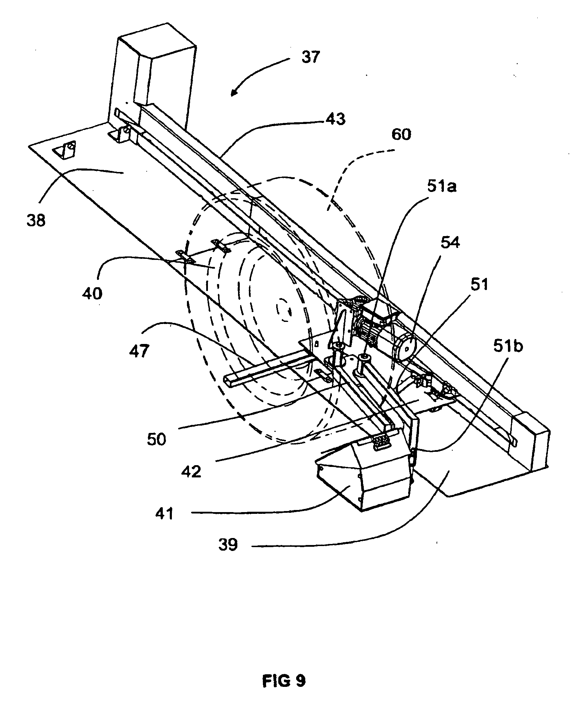

Les figures 8 et 9 sont relatives à un autre mode de mise en oeuvre de l'invention. Il s'agit d'une installation motorisée 37 qui est prévue pour être ancrée dans le sol perpendiculairement au quai de chargement, de façon à ce qu'un engin qui se place contre le quai en position de chargement /déchargement se positionne parallèlement à l'installation en question.

Selon le mode de réalisation illustré, l'installation est modulaire, elle comprend deux modules d'extrémité, à savoir un module 38 qui est prévu pour être installé contre le quai, un module 39 prévu pour se trouver en tête, et un certain nombre de modules intermédiaires 40, ce nombre étant égal ou supérieur à zéro en fonction de la longueur souhaitée pour l'installation. La longueur en question est fonction de la distance maximale dont on souhaite pouvoir éloigner le sabot relativement au quai, cela dépend du porte-à-faux de l'engin. A titre indicatif l'installation peut mesurer de trois à six mètres. Les modules sont assemblés entre eux par tout moyen approprié. D'autres modes de construction de l'installation conviennent également.

L'installation 37 comprend un sabot de calage 41 qui est relié à un chariot 42. Pour l'essentiel le sabot 41 est identique au sabot décrit relativement aux figures 1 à 7. Le chariot est monté sur des roues et il est mobile le long d'un rail 43 qui courre le long des différents modules. Le déplacement du chariot est piloté par un moteur, ou un motoréducteur 45 qui est monté sur un des modules, le module 38 selon les figures. De préférence le moteur est protégé par un carter qui n'est pas présent dans la figure 4. L'entraînement du chariot est réalisé à l'aide d'une chaîne ou d'une courroie sans fin qui est renvoyée à chaque extrémité du rail 43 et qui est accrochée au chariot 42.

De préférence, le chariot est équipé d'un détecteur qui contrôle l'avancement du chariot par rapport à la roue arrière de l'engin. Dans les figures, le détecteur est un barreau 47 qui est solidaire du chariot dans son mouvement le long du rail et qui est orienté transversalement à la direction du rail 43. De préférence, le barreau 47 est amovible pour pouvoir être démonté si c'est nécessaire, par exemple si l'engin a deux essieux jumelés, et qu'on souhaite engager le sabot sous une roue de l'essieu le plus éloigné de l'arrière de l'engin.

Le sabot 41 est relié au chariot par un système de bras qui forme avec le sabot et le chariot un parallélogramme déformable. Ainsi, deux bras 50 et 51 relient le sabot et le chariot autour d'axes de liaison qui sont orientés verticalement. De préférence, les bras sont relativement longs, et ils ont une orientation initiale proche de la direction définie par le rail 43, pour que le sabot se déplace relativement au chariot pour l'essentiel selon une direction perpendiculaire à la direction longitudinale du rail. A titre indicatif, on a obtenu de bons résultats avec une longueur de bras de 70 centimètres mesurée entre les deux axes d'articulation (à préciser). Cette valeur est seulement indicative.

Le déplacement du sabot est piloté par un moteur ou un motoréducteur 54 qui est monté sur le chariot. Le moteur 54 est relié à un bras d'entraînement 56 qui s'étend dans la zone des bras 50 et 51.

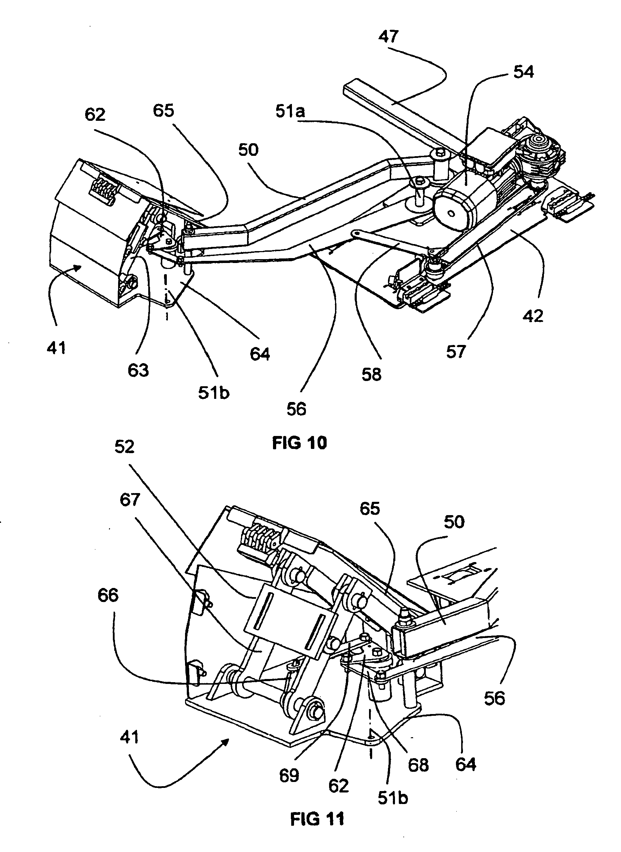

Le bras 56 est plus particulièrement visible dans la figure 10. Pour des raisons de clarté, le bras 51 a été enlevé dans cette figure, seuls sont visibles ses axes d'articulation 51 a et 51 b au chariot et au sabot.

Le bras d'entraînement 56 est monté pivotant sur l'axe 51a du bras 51, et son autre extrémité est reliée à un mécanisme de liaison avec la genouillère 52 du sabot 41 qui sera décrit ultérieurement. C'est le moteur 54 qui entraîne le bras 56 en rotation. Selon le mode de réalisation illustré, le moteur 54 entraîne une courroie sans fin 57 prise entre deux renvois, sur laquelle est serré un collier qui est relié au bras 56 par une biellette 58. La course du collier entre les deux renvois de la courroie force le bras 56 à déplacer le sabot 41 entre une position d'attente représentée en figure 8 où le sabot est dans le prolongement longitudinal du chariot 42, et une position de service représentée en figure 9 où le sabot 41 est écarté du rail prêt à s'engager sous une roue qu'on a figuré par le train pointillé 60. Dans sa position de service le sabot repose de préférence directement sur le sol.

D'autres mécanismes conviennent également pour déplacer le sabot, par exemple un mécanisme à roues dentées, ou un mécanisme de type bielle/manivelle. Au lieu d'un mécanisme commandé par un moteur, on peut aussi piloter le déplacement du sabot 41 par un système hydraulique ou pneumatique.

Le mécanisme de liaison avec la genouillère 52 du sabot fonctionne de la façon suivante. Lorsque le bras d'entraînement 56 repousse le sabot vers la position de service, le mécanisme et la genouillère se comportent comme un ensemble monolithique. Lorsque le bras d'entraînement rappelle le sabot vers sa position d'attente, la traction du bras 56 est transmise au système qui pilote la cassure de la genouillère. Si le sabot n'offre aucune résistance pour être dégagé de la roue, la traction du bras 56 est suffisante pour faire glisser le sabot vers sa position d'attente, et la genouillère est maintenue en position ouverte par le ressort de rappel. Si le sabot se trouve coincé sous la roue, l'embase 64 du sabot est immobilisée, la traction du bras 56 provoque la cassure de la genouillère, et donc l'abaissement du panneau 65 jusqu'à ce que l'embase 64 devienne libre de glisser contre le sol. La genouillère se réarme ensuite d'elle-même sous l'action du ressort de rappel.

Un mécanisme de liaison est visible dans la figure 11. Il comprend un palonnier de renvoi pivotant 62 qui est connecté d'un côté à l'extrémité du bras d'entraînement 56 et de l'autre au loquet 66 solidaire en rotation avec la biellette 67 de la genouillère. La connexion est réalisée par tout moyen approprié, et par exemple par des biellettes de connexion 68 et 69. Le bras 56 peut être connecté directement au palonnier de renvoi.

Lorsque le moteur 54 exerce une poussée sur le bras 56, le palonnier de renvoi sollicite la genouillère dans le sens de son ouverture. Comme elle est déjà ouverte et en position stable, le mécanisme de liaison n'a aucune action sur le sabot et se comporte comme un ensemble monolithique. Son mouvement est transmis directement au sabot. Si le bras 56 est sollicité en traction par le moteur, le palonnier 62 exerce sur le loquet 66 un effort qui tend à casser la genouillère 52. Le mouvement du bras est transmis à la genouillère si le déplacement du sabot est entravé, et il est transmis au sabot lui-même si le sabot peut glisser librement sur le sol.

Dans son état initial le chariot est placé contre le quai, le sabot se trouve en position d'attente dans l'alignement du chariot. Puis le chariot est éloigné du quai jusqu'à ce que le barreau 47 entre en contact avec une roue de l'engin. A ce moment le mouvement du chariot est stoppé. Par exemple on peut prévoir un limiteur de couple au niveau du moteur d'entraînement 45. D'autres systèmes de détection mécaniques, optiques, électriques ou électroniques peuvent également convenir, par exemple un actionneur électrique lié au barreau 47.

Durant cette première phase de calage de l'engin, le sabot se déplace avec le chariot, et il est maintenu dans l'alignement du chariot, pour ne par interférer avec le rail 43 ou avec l'engin.

Le moteur 54 agit ensuite sur le bras d'entraînement 56 pour placer le sabot dans la position de service. La longueur des bras 50 et 51 est suffisante pour qu'ils guident le sabot devant la roue, sans interférer avec elle quelque soit son diamètre.

Lorsque le sabot 41 a atteint sa position de service, le chariot est rappelé en direction du quai par le moteur 45 jusqu'à ce que le sabot se cale sous la roue 60. L'engin est alors immobilisé.

Pour dégager le sabot, le moteur 54 commande le bras 56 dans la direction où le bras 56 exerce une traction sur le sabot 41. Si la roue s'oppose au déplacement du sabot, le bras d'entraînement commande la cassure de la genouillère dans un premier temps, ce qui soulage immédiatement le sabot de la contrainte exercée par la roue. Le sabot se dégage alors de la roue, la genouillère se réarme d'elle même grâce au ressort de rappel, et le bras ramène le sabot en position d'attente. Le sabot se dégage directement de la roue si celle-ci ne le retient pas coincé. Puis le chariot est ramené contre le quai par le moteur 45. L'exécution des différents mouvements peut être contrôlée par tout moyen approprié, limiteur de couple, contacteur de fin de course ou autre.

D'autres modes de construction peuvent également convenir. En particulier le bras 56 peut se substituer à l'un ou l'autre des bras 50 et 51.

Ainsi le sabot qui vient d'être décrit peut être dégagé d'une roue en toute circonstance sans avoir besoin de déplacer l'engin.

La mise en place de l'installation 37 se fait aisément et un ancrage simple au sol ou contre un mur est suffisant. On n'a pas besoin de réaliser un ouvrage particulier de génie civil comme une tranchée ou autre.

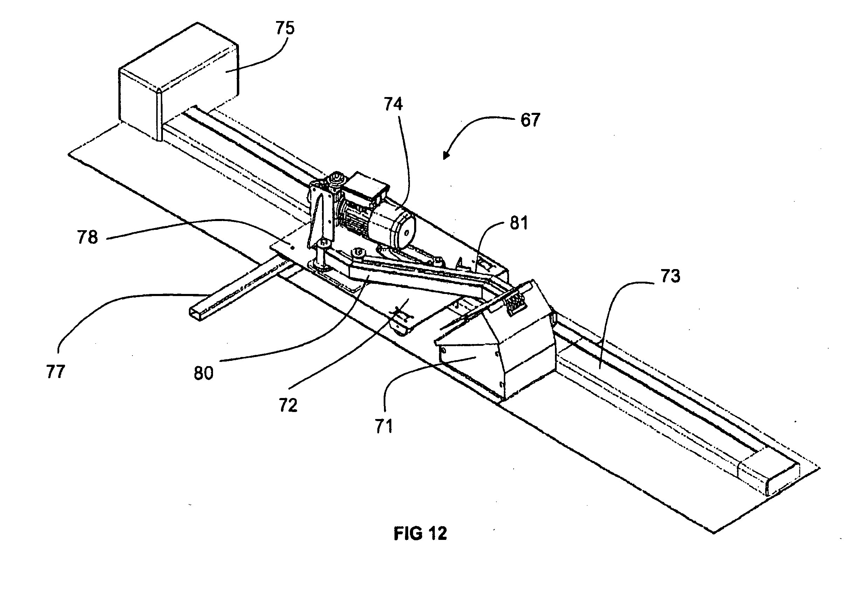

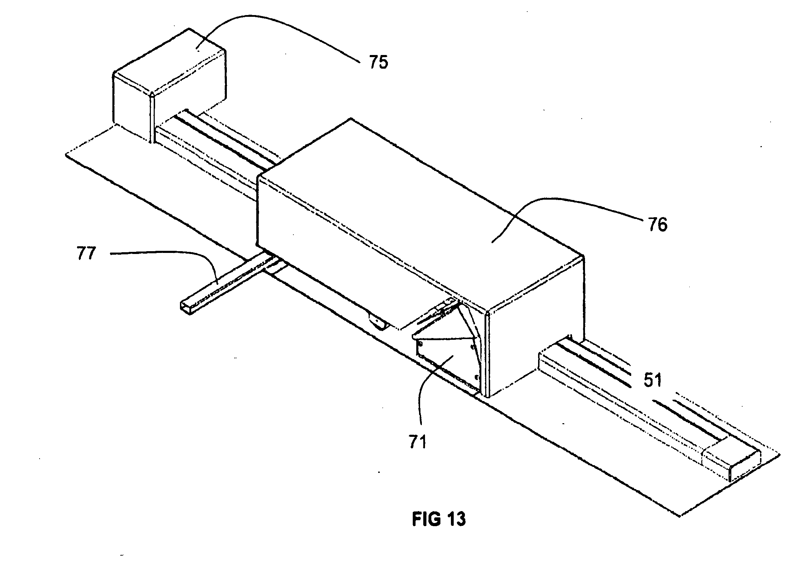

Les figures 12 et 13 montrent un autre mode de construction d'une installation motorisée 67. Comme précédemment l'installation comprend un sabot 71 qui est relié à un chariot mobile 72 par l'intermédiaire de bras de liaison 80, 81 et d'un bras d'entraînement qui n'est pas visible dans la figure. La construction du sabot et son mode de fonctionnement sont semblables à ce qui a été décrit précédemment. Le déplacement du sabot est piloté par un moteur 74 qui est monté sur le chariot, et le déplacement du chariot le long d'un rail de guidage 73 est commandé par un moteur qui est placé sous le carter de protection 75. Comme précédemment un barreau transversal 77 monté sur le chariot permet de détecter la position correcte du chariot relativement à la roue d'un véhicule. De préférence, le barreau est amovible pour pouvoir être démonté si cela est nécessaire, par exemple si le véhicule a sur l'arrière un essieu escamotable qui est abaissé en cours de chargement. Comme cela est visible dans la figure 13, le chariot peut être recouvert par un carter de protection 76 muni d'une ouverture permettant au sabot de s'escamoter sous le carter lorsqu'il est en position d'attente.

A la différence du mode de construction précédent, le rail de guidage 73 présente une faible hauteur par rapport au sol, et le chariot 72 chevauche le rail. Le chariot se guide le long du rail à l'aide de galets ou d'un étrier. Comme le rail a une faible hauteur, il est moins vulnérable si jamais une des roues du camion ou de la remorque passe dessus au cours d'une manoeuvre. A titre indicatif la hauteur du rail peut être de 6 centimètres. Le cas échéant les bords du rails peuvent être inclinés pour faciliter encore le franchissement, en prévoyant pour le chariot un système de guidage à recentrage automatique.

Selon un autre mode de construction, le chariot peut être déplacé à l'aide d'un moteur qui est porté par le chariot lui-même. Dans ce cas, le chariot est relié au quai uniquement par un câble d'alimentation électrique.

Selon encore un autre mode de construction l'alimentation électrique des moteurs est embarquée sur le chariot, par exemple il s'agit de batteries d'alimentation de moteurs à courant continu, et les mouvements du chariot et de la cale sont pilotés à distance par un système de télécommande.

D'autres variantes de construction sont encore possibles.

Naturellement la présente description n'est donnée qu'à titre indicatif et l'on pourrait adopter d'autres mises en oeuvre de l'invention sans pour autant sortir du cadre de celle-ci.

## Revendications

1. Sabot de calage prévu pour caler une roue d'un engin roulant sur le sol et comprenant une embase (2, 27, 32, 64) prévue pour reposer contre la surface du sol, une rampe d'appui oblique (3) prévue pour être engagée sous la bande de roulement de la roue, la rampe d'appui étant la face externe d'un panneau (9, 26, 31 , 65) ayant deux bords transversaux (9a, 9b, 26a, 26b, 31 a, 31 b), le panneau étant mobile relativement à l'embase (2, 27, 32, 64) entre une position de calage où la rampe d'appui (3) est inclinée relativement à l'embase selon un angle donné de calage et une position de dégagement où un bord transversal au moins (9a, 9b, 26a, 26b, 31 a, 31 b) du panneau (9, 26, 31) est rapproché de l'embase,
**caractérisé en ce que** :
- le panneau (9, 26, 31 , 64) est relié à l'embase (2, 27, 32, 64) par un mécanisme à genouillère (11, 28, 33, 34, 63) mobile entre une position ouverte et une position cassée, ladite genouillère étant formée par deux biellettes (12, 13) articulées à l'embase (2) et au panneau (9), et reliées entre elles par une articulation commune,
- un loquet (19, 66) est solidaire en rotation avec l'une des biellettes, et peut être manoeuvré pour briser la genouillère,
- un dispositif de rappel élastique (18) s'oppose élastiquement à la cassure de la genouillère et rappelle la genouillère en position ouverte.

2. Sabot selon la revendicadon 1, **caractérisé par le fait que** le dispositif de rappel est un ressort (18) qui rappelle élastiquement le panneau (9, 26, 31, 65) dans la position où la rampe (3) est en position de calage.

3. Sabot selon la revendication 1, **caractérisé par le fait que** le loquet (19) est manoeuvré à l'aide d'une pédale (20).

4. Sabot selon la revendication 1, **caractérisé par le fait que** le loquet (19) est manoeuvré à l'aide d'un levier de guidage (8) du sabot.

5. Installation de calage prévue pour caler une roue d'un engin roulant sur le sol, **caractérisée par le fait qu'**elle comprend un sabot de calage (41, 71) selon l'une quelconque des revendications 1 à 4.

6. Installation selon la revendication 5, caractértsée par le fait que le sabot (41, 71) est relié à un chariot (42, 72) mobile le long d'un rail (43, 73).

7. Installation selon la revendication 6, **caractérisée par le fait que** le sabot est relié au chariot par un bras d'entraînement (56) connecté à un mécanisme de liaison avec ladite genouillère.

8. Installation selon la revendication 7, **caractérisée par le fait que** le bras d'entraînement (56) est entraîné en déplacement par un moteur (54).

9. Installation selon la revendication 7, **caractérisée par le fait que** le bras d'entraînement (56) est connecté à un palonnier de renvoi (62) relié à un loquet (66) solidaire en rotation avec une biellette de la genouillère (52).

10. Installation selon la revendication 6, **caractérisée par le fait que** le chariot (42, 72) est muni d'un barreau transversal (47, 77) de détection amovible.

## Patentansprüche

1. Hemmschuh, der zum Feststellen eines Rads eines auf dem Boden rollenden Geräts vorgesehen ist und eine Basis (2, 27, 32, 64), die zum Ruhen auf der Bodenoberfläche vorgesehen ist, und eine schräge Stützrampe (3) umfasst, die dazu vorgesehen ist, unter der Lauffläche des Rads in Eingriff zu kommen, wobei die Stützrampe die Außenfläche einer Platte (9, 26, 31, 65) mit zwei Querrändern (9a, 9b, 26a, 26b, 31a, 31b) ist und bezüglich der Basis (2, 27, 32, 64) zwischen einer Feststellposition, in der die Stützrampe (3) in einem gegebenen Feststellwinkel bezüglich der Basis geneigt ist, und einer Ausrückposition, in der mindestens ein Querrand (9a, 9b, 26a, 26b, 31a, 31b) der Platte (9, 26, 31) an die Basis angenähert ist, beweglich ist,
**dadurch gekennzeichnet, dass**
die Platte (9, 26, 31, 64) mit der Basis (2, 27, 32, 64) über einen Kniegelenkmechanismus (11, 28, 33, 34, 63) verbunden ist, der zwischen einer offenen Position und einer abgeknickten Position beweglich ist, wobei das Kniegelenk durch zwei Schubstangen (12, 13) gebildet ist, die an die Basis (2) und an die Platte (9) angelenkt und über ein gemeinsames Gelenk miteinander verbunden sind, ein Feststeller (19, 66) drehfest mit einer der Schubstangen verbunden ist und zum Brechen des Kniegelenks betätigt werden kann, und
eine elastische Rückholvorrichtung (18) dem Abknicken des Kniegelenks elastisch widersteht und das Kniegelenk in die offene Position zurückholt.

2. Schuh nach Anspruch 1, **dadurch gekennzeichnet, dass** die Rückholvorrichtung eine Feder (18) ist, die die Platte (9, 26, 31, 65) elastisch in die Position zurückholt, in der die Rampe (3) in der Feststellposition ist.

3. Schuh nach Anspruch 1, **dadurch gekennzeichnet, dass** der Feststeller (19) mittels eines Pedals (20) betätigt wird.

4. Schuh nach Anspruch 1, **dadurch gekennzeichnet, dass** der Feststeller (19) mittels eines Führungshebels (8) des Schuhs betätigt wird.

5. Feststellanlage, die zum Feststellen eines Rads eines auf dem Boden rollenden Geräts vorgesehen ist, **dadurch gekennzeichnet, dass** sie einen Hemmschuh (41, 71) nach einem der Ansprüche 1 bis 4 umfasst.

6. Feststellanlage nach Anspruch 5, **dadurch gekennzeichnet, dass** der Schuh (41, 71) mit einem entlang einer Schiene (43, 73) beweglichen Schlitten (42, 72) verbunden ist.

7. Feststellanlage nach Anspruch 6, **dadurch gekennzeichnet, dass** der Schuh mit dem Schlitten über einen Antriebsarm (56) verbunden ist, der mit einem Verbindungsmechanismus mit dem Kniegelenk verbunden ist.

8. Feststellanlage nach Anspruch 7, **dadurch gekennzeichnet, dass** der Antriebsarm (56) durch einen Motor (54) verschoben wird.

9. Feststellanlage nach Anspruch 7, **dadurch gekennzeichnet, dass** der Antriebsarm (56) mit einem Winkelhebel (62) verbunden ist, der mit einem drehfest mit einer Schubstange des Kniegelenks (52) verbundenen Feststeller (66) verbunden ist.

10. Feststellanlage nach Anspruch 6, **dadurch gekennzeichnet, dass** der Schlitten (42, 72) mit einem entfernbaren Erfassungsquerstab (47, 77) versehen ist.

## Claims

1. Chocking block intended for chocking a wheel of a rolling vehicle on the ground and comprising a base (2, 27, 32, 64) intended for resting against the surface of the ground, an oblique bearing ramp (3) intended to be engaged below the tread of the wheel, the bearing ramp being the external face of a panel (9, 26, 31, 65) having two transverse edges (9a, 9b, 26a, 26b, 31a, 31b), the panel being able to move relative to the base (2, 27, 32, 64) between a chocking position in which the bearing ramp (3) is inclined relative to the base at a given chocking angle and a release position in which at least one transverse edge (9a, 9b, 26a, 26b, 31a, 31b) of the panel (9, 26, 31) is moved closer to the base, **characterized in that**:
- the panel (9, 26, 31, 64) is connected to the base (2, 27, 32, 64) by a toggle joint mechanism (11, 28, 33, 34, 63) which can move between an open position and a broken position, the said toggle joint being formed by two link rods (12, 13) articulated to the base (2) and to the panel (9), and interconnected by a common articulation,
- a latch (19, 66) is coupled in rotation with one of the link rods, and can be manoeuvred to break the toggle joint,
- an elastic return device (18) elastically opposes the breaking of the toggle joint and returns the toggle joint into the open position.

2. Block according to Claim 1, **characterized in that** the return device is a spring (18) which elastically returns the panel (9, 26, 31, 65) into the position in which the ramp (3) is in the chocking position.

3. Block according to Claim 1, **characterized in that** the latch (19) is manoeuvred with the aid of a pedal (20).

4. Block according to Claim 1, **characterized in that** the latch (19) is manoeuvred with the aid of a lever (8) for guiding the block.

5. Chocking installation intended for chocking a wheel of a rolling vehicle on the ground, **characterized in that** it comprises a chocking block (41, 71) according to one of Claims 1 to 4.

6. Installation according to Claim 5, **characterized in that** the block (41, 71) is connected to a carriage (42, 72) which can move along a rail (43, 73).

7. Installation according to Claim 6, **characterized in that** the block is connected to the carriage by a drive arm (56) connected to a mechanism for connecting with the said toggle joint.

8. Installation according to Claim 7, **characterized in that** the drive arm (56) is caused to move by a motor (54).

9. Installation according to Claim 7, **characterized in that** the drive arm (56) is connected to a bellcrank (62) connected to a latch (66) coupled in rotation with a link rod of the toggle joint (52).

10. Installation according to Claim 6, **characterized in that** the carriage (42, 72) is provided with a removable transverse detection bar (47, 77).
